# EUROPÄISCHE PATENTSCHRIFT

(11) **EP 3 242 807 B1**
(45) Veröffentlichungstag und Bekanntmachung des Hinweises auf die Patenterteilung: **10.07.2019**
(21) Anmeldenummer: 16723934.2
(22) Anmeldetag: 03.05.2016
(51) Int. Cl.: B60J 7/00, B60J 7/22

(54) **DACH FÜR EINEN KRAFTWAGEN, INSBESONDERE EINEN PERSONENKRAFTWAGEN**
ROOF FOR A MOTOR VEHICLE, IN PARTICULAR A PASSENGER CAR
TOIT DESTINÉ À UN VÉHICULE À MOTEUR, NOTAMMENT UNE VOITURE DE TOURISME

(30) Priorität: 06.05.2015 DE 102015005802
(43) Veröffentlichungstag der Anmeldung: 15.11.2017
(73) Patentinhaber: Daimler AG, 70327 Stuttgart (DE)
(72) Erfinder: BAESSLER, Thomas, 71088 Holzgerlingen (DE); DEMMER, Achim, 71106 Magstadt (DE); KUTTNER, Hans-Peter, 71093 Weil im Schoenbuch (DE)
(74) Vertreter: JENSEN & SON
(86) Internationale Anmeldenummer: PCT/EP2016/000725
(87) Internationale Veröffentlichungsnummer: WO 2016/177465

(56) Entgegenhaltungen:
- DE-A1-102005 042 187
- JP-A- 2006 315 615
- JP-U- S5 870 916

## Beschreibung

Die Erfindung betrifft ein Dach für einen Kraftwagen, insbesondere einen Personenkraftwagen, gemäß Oberbegriff des Anspruchs 1.

Aus der EP 1 974 970 A1 geht ein Dach für einen Kraftwagen, insbesondere einen Personenkraftwagen, hervor, das wenigstens ein Deckelelement, welches in Fahrzeuglängsrichtung zwischen einer Schließstellung zum Verschließen zumindest eines Teilbereichs einer Dachöffnung und wenigstens einer Offenstellung zum Freigeben des Teilbereichs bewegbar ist, umfasst. Mit anderen Worten, im fertig hergestellten Zustand des Kraftwagens ist durch das geschlossene Deckelelement zumindest ein Teilbereich einer Dachöffnung des Kraftwagens verschlossen. In der Offenstellung gibt das Deckelelement den Teilbereich frei, so dass beispielsweise sich im Innenraum des Kraftwagens aufhaltende Insassen durch den freigegebenen Teilbereich hindurch an die Umgebung des Kraftwagens blicken können. Dabei ist das Dach beispielsweise als Schiebedach, insbesondere als außenlaufendes Schiebedach, ausgebildet, wobei das Deckelelement in Fahrzeuglängsrichtung verschiebbar ist. Das Dach kann ferner als Schiebe-Hebe-Dach ausgebildet sein, wobei das Deckelelement, insbesondere zumindest eine hintere Kante des Deckelelements, in Fahrzeughochrichtung verlagerbar ist.

Das Dach umfasst ferner einen zumindest an einer vorderen Kante der Dachöffnung angeordneten Windabweiser, welcher zwischen einer eingefahrenen Stellung und wenigstens einer ausgefahrenen Stellung bewegbar ist. Hierbei umfasst der Windabweiser beispielsweise wenigstens ein eigensteifes Spannelement, insbesondere in Form eines Bügels, welches in Fahrzeughochrichtung relativ zu einem Dachrahmen, insbesondere vorderen Dachrahmen, verlagerbar ist. Dieser Dachrahmen begrenzt die Dachöffnung beispielsweise in Fahrzeuglängsrichtung nach vorne. Ferner umfasst der Windabweiser beispielsweise ein flexibles und von Luft durchströmbares Netz, welches mit dem Spannelement verbunden und somit mit dem Spannelement mit verstellbar ist. In der ausgefahrenen Stellung ist das flexible Netz durch das Spannelement aufgespannt, da das flexible Netz beispielsweise einerseits am Spannelement und andererseits am Dachrahmen gehalten und somit zwischen dem Spannelement und dem Dachrahmen aufgespannt ist. In der eingefahrenen Stellung, in welcher das Spannelement gegenüber der ausgefahrenen Stellung zumindest teilweise näher am Dachrahmen angeordnet ist, ist das Netz zusammengefaltet. Mittels des Windabweisers können in der Offenstellung des Deckelelements unerwünschte Luftströmungen und daraus resultierende, im Innenraum wahrnehmbare Wummergeräusche vermieden oder zumindest gering gehalten werden.

Aus der JP 2006 315615 A geht ein Kraftwagen mit einem mit einer Dachöffnung versehenen Dach hervor. Die Dachöffnung ist mittels eines zwischen einer Schließ- und einer Offenstellung verstellbaren Deckelelements öffenbar und schließbar. Am vorderen Rand der Dachöffnung und an den seitlichen Rändern der Dachöffnung ist jeweils ein zwischen einer ein- und einer ausgefahrenen Stellung verstellbarer Windabweiser in Form einer rechteckförmigen Blende vorgesehen, welche im ausgefahrenen Zustand zusammen die Dachöffnung quasi einrahmen und dabei jeweils in Richtung zur Dachöffnungsmitte hin schräg angestellt sind.

Aus der JP S58 70916 U geht ein Kraftwagen mit einem mit einem verstellbaren Deckelelement versehenes Dach hervor. Mittels des zwischen einer Schließ- und einer Offenstellung verlagerbaren Deckelelements ist eine Dachöffnung verschließbar und freigebbar. Am vorderen Rand der Dachöffnung ist ein mehrteiliger Windabweiser vorgesehen, dessen Teilelemente zwischen einer eingefahrenen und einer ausgefahrenen Stellung bewegbar sind, wobei ein mittleres Teilelement unabhängig von den benachbarten äußeren Teilelementen bewegbar ist.

Aus der DE 10 2005 042 187 A1 ist ein Windabweiser bekannt, bei dem zwischen der seitlichen Stirnseite eines Deckelelements und dem Öffnungsrand eines Dachrahmens eine jeweils zugeordnete Verblendung vorgesehen ist, welche sich in der Abweisstellung des Deckelelements zumindest in einem Längenbereich der zugeordneten seitlichen Stirnseite des Deckelelements erstreckt. Durch diese Verblendung ist im Bereich der seitlichen Stirnseite des Deckelelements erreicht, dass die Windgeräusche, insbesondere bei einer schrägen Anströmung des Windabweisers, verringert werden.

Aufgabe der vorliegenden Erfindung ist es, ein Dach der hier angesprochenen Art derart weiterzuentwickeln, dass, insbesondere bei geöffnetem Deckelelement, ein besonders hoher Fahrkomfort realisiert werden kann.

Diese Aufgabe wird erfindungsgemäß durch ein Dach mit den Merkmalen des Anspruchs 1 gelöst. Vorteilhafte Ausgestaltungen mit zweckmäßigen Weiterbildungen der Erfindung sind in den übrigen Ansprüchen angegeben.

Das Dach umfasst wenigstens ein Deckelelement, welches in Fahrzeuglängsrichtung zwischen einer Schließstellung zum Verschließen zumindest eines Teilbereichs einer Dachöffnung und wenigstens einer Offenstellung zum Freigeben des Teilbereichs bewegbar ist, und einen zumindest an einer vorderen Kante der Dachöffnung angeordneten Windabweiser, welcher zwischen einer eingefahrenen Stellung und wenigstens einer ausgefahrenen Stellung bewegbar ist. Dabei ist vorgesehen, dass das Deckelelement breiter als der Windabweiser ist und dass in Fahrzeugquerrichtung außerhalb des Windabweisers beidseitig jeweils wenigstens ein Windabweiselement angeordnet ist, welches zwischen einer eingefahrenen Stellung und wenigstens einer ausgefahrenen Stellung bewegbar ist.

Erfindungsgemäß ist vorgesehen, dass das jeweilige Windabweiselement in seiner ausgefahrenen Stellung -in Fahrzeuglängsrichtung gesehen- nach hinten in Richtung auf das in Offenstellung angeordnete Deckelelement in der Art einer ansteigenden Rampe oder schiefen Ebene so aufstellbar ist, dass seitliche, äußere Teilbereiche des Deckelelements in Fahrzeuglängsrichtung nach vorne durch das jeweilige Windabweiselement überdeckt sind.

In der ausgefahrenen Stellung ist das jeweilige Windabweiselement in Fahrzeughochrichtung -zumindest abschnittsweise- weiter oben angeordnet als in der eingefahrenen Stellung, so dass mittels des jeweiligen Windabweiselements in der jeweiligen ausgefahrenen Stellung Luft beziehungsweise Fahrtwind besonders vorteilhaft geleitet beziehungsweise beeinflusst werden kann. Durch die in Fahrzeugquerrichtung weiter außen als der Windabweiser angeordneten Windabweiselemente kann ein besonders hoher Fahrkomfort realisiert werden, da unerwünschte Luftströmungen und daraus resultierende, in Innenraum akustisch wahrnehmbare Geräusche besonders effektiv vermieden oder zumindest geringgehalten werden können, indem zumindest Teilluftströme in den seitlichen Außenbereichen der Vorderkante des geöffneten Deckelelements über dieses beziehungsweise dessen Vorderkante hinweg geleitet beziehungsweise umgelenkt werden.

Insbesondere können bei geöffnetem Deckelelement übermäßige Windgeräusche vermieden werden, so dass sich bei geöffnetem Deckelelement eine besonders somit komfortable Fahrt realisieren lässt.

Hintergrund der Erfindung ist, dass herkömmliche und beispielsweise als Bügelwindabweiser ausgebildete Windabweiser, welche ein flexibles, von Luft durchströmbares Netz und wenigstens ein eigensteifes Spannelement insbesondere in Form eines Bügels umfassen, innenliegend in einem Trockenbereich angeordnet sind und demzufolge nicht breiter oder maximal genauso breit wie die in der Offenstellung des Deckelelements zumindest teilweise freigegebene Dachöffnung sind. Ferner ist das Deckelelement, insbesondere bei einem als Schiebedach, insbesondere außenlaufendes Schiebedach (ASD) ausgebildeten Dach, üblicherweise breiter als die Dachöffnung und kann dabei auch breiter als der Windabweiser sein. Somit werden beispielsweise seitliche Teilbereiche des Deckelelements in Fahrzeuglängsrichtung nach vorne üblicherweise nicht von dem Windabweiser beziehungsweise seiner Breite abgedeckt, so dass diese, nicht durch den Windabweiser abgedeckte Teilbereiche des Deckelelements Windgeräusche im Fahrbetrieb verursachen können.

Dadurch, dass beim erfindungsgemäßen Dach es nun vorgesehen ist, in Fahrzeugquerrichtung außerhalb des Windabweisers beidseitig des Windabweisers jeweils wenigstens ein von vorne unten nach hinten oben schräg anstellbares Windabweiselement anzuordnen, können in Fahrzeugquerrichtung außerhalb des Windabweisers angeordnete Teilbereiche, insbesondere Randbereiche, des Deckelelements, in Fahrzeuglängsrichtung nach vorne hin durch die jeweiligen Windabweiselemente abgedeckt beziehungsweise überdeckt werden, insbesondere wenn sich das Deckelelement in einer Offenstellung befindet und sich die Windabweiselemente in ihrer jeweiligen ausgefahrenen Stellung befinden. Dadurch kann im Fahrbetrieb eine ungünstige Anströmung oder Umströmung des Deckelelements, insbesondere seiner in Fahrzeuglängsrichtung vorderen Kante, vermieden werden, so dass auch übermäßige und unerwünschte Windgeräusche vermieden werden können. Trotz dass das Deckelelement in Fahrzeugquerrichtung breiter als der Windabweiser ausgeführt ist, kann dennoch ein vorteilhafter Fahrkomfort bei geöffnetem Deckelelement realisiert werden, da die in Fahrzeugquerrichtung weiter außen als der Windabweiser angeordnete Teilbereiche des Deckelelements in Fahrzeuglängsrichtung nach vorne hin durch die jeweiligen Windabweiselemente abgedeckt werden können. Durch die Windabweiselemente kann dann eine ungünstige Anströmung beziehungsweise Umströmung des Deckelelements, insbesondere seiner vorderen Kante und insbesondere der genannten Teilbereiche, vermieden werden.

Das erfindungsgemäße Dach ist vorzugsweise als Schiebedach und insbesondere als außenlaufendes Schiebedach (ASD) ausgebildet, wobei das Deckelelement eine besonders große, in Fahrzeugquerrichtung verlaufende Breite aufweist. Dabei ist das Deckelelement beispielsweise breiter als die Dachöffnung und breiter als der Windabweiser, wobei sich durch den Einsatz der Windabweiselemente ein vorteilhafter Fahrkomfort realisieren lässt.

Bei einem besonders vorteilhaften Ausführungsbeispiel des Dachs ist vorgesehen, dass bei in seiner ausgefahrenen Stellung nach hinten in Richtung auf das in Offenstellung angeordnete Deckelelement aufgestellte Windabweiselement eine -in Fahrzeuglängsrichtung gesehen- hintere Kante des Windabweiselements auf gleicher Höhe angeordnet ist wie eine -in Fahrzeuglängsrichtung gesehen- vordere Kante des Deckelelements. Hierdurch wird sichergestellt, dass der Fahrtwind geräuscharm über das in Offenstellung angeordnete Deckelelement hinweg geleitet wird und nicht frontal gegen die vordere Schmalseite des Deckelelements prallt.

Weitere Vorteile, Merkmale und Einzelheiten der Erfindung ergeben sich aus der nachfolgenden Beschreibung eines bevorzugten Ausführungsbeispiels sowie anhand der Zeichnung. Dabei zeigen:

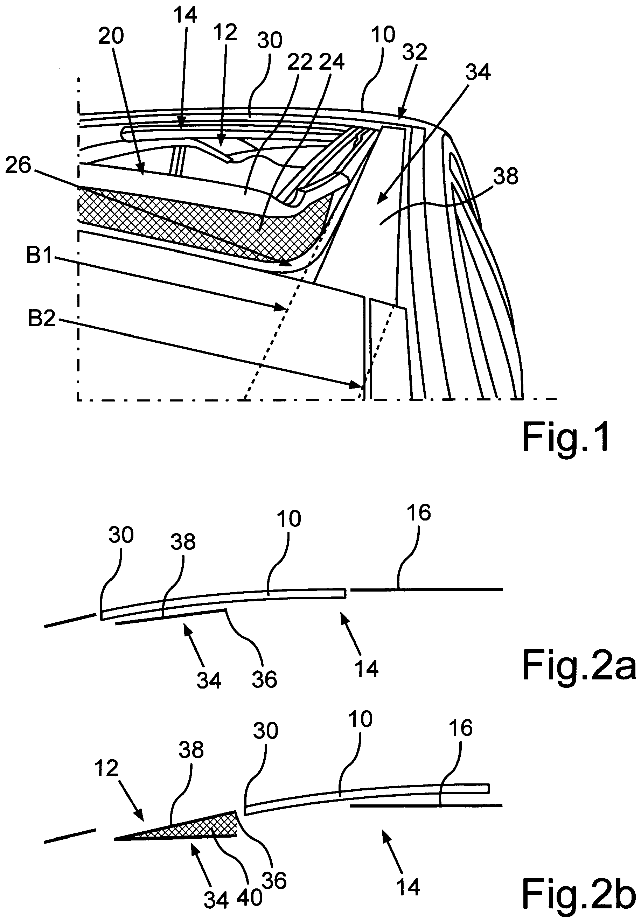

- Fig. 1: ausschnittsweise eine schematische und perspektivische Draufsicht auf ein Dach für einen Kraftwagen in Form eines Personenkraftwagens, mit wenigstens einem Deckelelement, welches in Fahrzeuglängsrichtung zwischen einer Schließstellung zum Verschließen zumindest eines Teilbereichs einer Dachöffnung und wenigstens einer Offenstellung zum Freigeben des Teilbereichs bewegbar ist, mit einem zumindest an einer vorderen Kante der Dachöffnung angeordneten Windabweiser, welcher zwischen einer eingefahrenen Stellung und wenigstens einer ausgefahrenen Stellung bewegbar ist, und mit in Fahrzeugquerrichtung außerhalb des Windabweisers beidseitig angeordneten Windabweiselementen, welche jeweils zwischen einer eingefahrenen Stellung und wenigstens einer ausgefahrenen Stellung bewegbar sind;
- Fig. 2 a, b: jeweils ausschnittsweise eine schematische Schnittansicht durch das Dach gemäß Fig. 1;
- Fig. 3: ausschnittsweise eine schematische und perspektivische Draufsicht auf das Dach gemäß Fig. 1, wobei in Fig. 3 eines der Windabweiselemente gezeigt ist, das sich in seiner ausgefahrenen Stellung befindet;
- Fig. 4: ausschnittsweise eine weitere und schematische und perspektivische Draufsicht auf das Dach gemäß Fig. 1;
- Fig. 5: ausschnittsweise eine schematische und perspektivische Seitenansicht auf das Dach gemäß Fig. 1, wobei sich eines der Windleitelemente in seiner ausgefahrenen Stellung befindet;
- Fig. 6: ausschnittsweise eine weitere schematische Seitenansicht auf das Dach gemäß Fig. 1 und
- Fig. 7: ausschnittsweise eine weitere schematische und perspektivische Draufsicht auf das Dach gemäß Fig. 1.

In den Figuren sind gleiche oder funktionsgleiche Elemente mit gleichen Bezugszeichen versehen.

Fig. 1 zeigt in einer schematischen und perspektivischen Draufsicht ein Dach für einen Kraftwagen in Form eines Personenkraftwagens. Das Dach ist vorliegend mit einem Schiebedachsystem versehen, welches als außenlaufendes Schiebedach ausgebildet ist. Das Schiebedachsystem weist dabei wenigstens ein Deckelelement 10 auf, welches in fertig hergestelltem Zustand des Kraftwagens in Fahrzeuglängsrichtung (x-Richtung) zwischen wenigstens einer in Fig. 1 gezeigten Offenstellung und einer in Fig. 2a veranschaulichten Schließstellung bewegbar ist. In der Schließstellung ist zumindest ein Teilbereich 12 einer im Ganzen mit 14 bezeichneten Dachöffnung des Personenkraftwagens durch das Deckelelement 10 verschlossen.

Wie in den Fig. 1 und 2b zu erkennen ist, gibt das Deckelelement 10 in seiner Offenstellung den Teilbereich 12 der Dachöffnung 14 frei, so dass beispielsweise sich im Innenraum des Personenkraftwagens aufhaltende Insassen durch den freigegebenen Teilbereich 12 nach außen an die Umgebung des Personenkraftwagens blicken können.

Das Dach ist beispielsweise ein Dachmodul, welches in die durch den Rohbau des Personenkraftwagens begrenzte Dachöffnung 14 eingesetzt ist. Die Dachöffnung 14 ist in Fahrzeugquerrichtung beispielsweise durch seitliche, in Fahrzeuglängsrichtung verlaufende Dachrahmen beziehungsweise Dachrahmenteile und in Fahrzeuglängsrichtung durch jeweilige, in Fahrzeugquerrichtung (y-Richtung) verlaufende Dachrahmen beziehungsweise Dachrahmenteile begrenzt, wobei das Dachmodul beispielsweise zumindest an den seitlichen Dachrahmen befestigt ist. Das Dachmodul weist vorzugsweise selbst einen Rahmen auf, an dem zumindest das bewegliche Deckelement 10, gegebenenfalls noch ein weiteres, bewegliches oder unbewegliches Deckelelement und gegebenenfalls noch Führungen, insbesondere Führungsschienen, und/oder ein Antrieb für zumindest das bewegliche Deckelement 10 und/oder Teile einer Windleiteinrichtung, auf welche nachstehend näher eingegangen wird, angeordnet sind. Das Dachmodul kann in einem Vormontageschritt außerhalb des Fahrzeugs soweit fertiggestellt werden, das heißt die vorgesehenen Bauteile an dem Rahmen angebracht werden, so dass das Dachmodul als Ganzes in die Dachöffnung 14 -vorzugsweise von außen- eingesetzt werden kann. In bevorzugter Ausführungsform ist vorgesehen, dass das Dachmodul mit dem eigentlichen Dachrahmen des Rohbaus stoffschlüssig, insbesondere verklebt wird. Gegebenenfalls sind zusätzlich oder alternativ auch mechanische Befestigungsmittel vorgesehen.

In den Fig. 2a und 2b ist ferner ein Beplankungselement 16 zu erkennen, mittels welchem der Rohbau des Personenkraftwagens verkleidet ist. Dieses Beplankungselement 16 könnte auch Teil des vorstehend beschriebenen Dachmoduls sein. Das Deckelelement 10 wird beim Öffnen dieses in Fahrzeuglängsrichtung nach hinten über das Beplankungselement 16 und nicht etwa unter dieses geschoben wird, so dass das Dach als außenlaufendes Schiebedach ausgebildet ist.

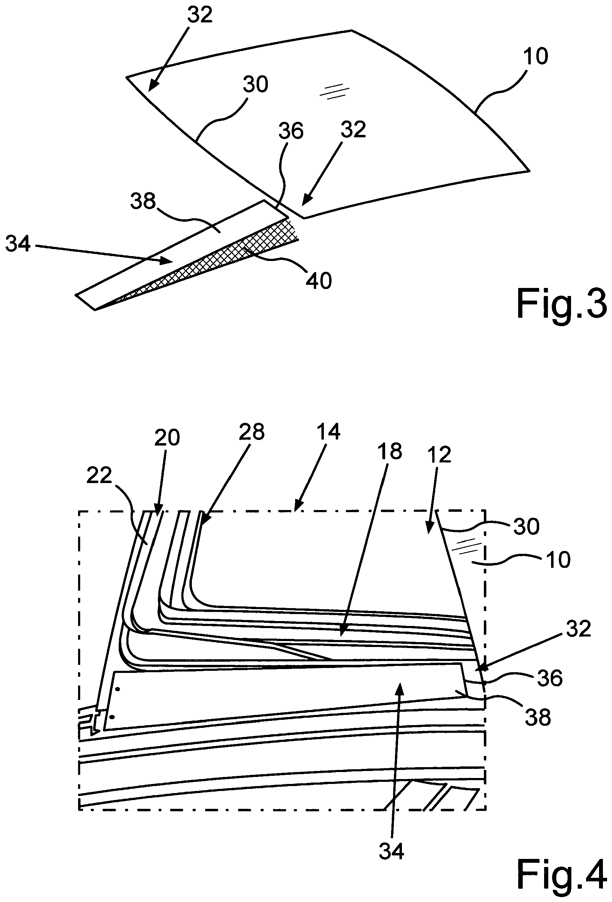

Aus Fig. 4 ist erkennbar, dass das Dach seitliche, sich zumindest im Wesentlichen in Fahrzeuglängsrichtung erstreckende Führungsschienen umfasst, von denen in Fig. 4 die mit 18 bezeichnete, linke Führungsschiene erkennbar ist. Das Deckelelement 10 ist dabei entlang der Führungsschienen in Fahrzeuglängsrichtung translatorisch zwischen der Offenstellung und der Schließstellung verschiebbar. Das genannte Dachmodul umfasst beispielsweise wenigstens einen in den Figuren nicht erkennbaren, eigensteifen Rahmen, über welchen das Dachmodul an den Rohbau angebunden ist. Dabei sind die Führungsschienen an dem Rahmen befestigt.

Das Dach umfasst ferner einen besonders gut in Fig. 1 erkennbaren Windabweiser 20, welcher als Bügelwindabweiser ausgebildet ist. Der Windabweiser 20 umfasst wenigstens ein vorzugsweise eigensteifes Spannelement in Form eines hier im Wesentlichen U-förmigen Bügels 22 sowie ein an dem Bügel 22 gehaltenes, von Luft durchströmbares und flexibles Netz 24. Das Netz 24 ist beispielsweise einerseits an dem Bügel 22 gehalten und andererseits mit dem in Fahrzeuglängsrichtung vorderen Dachrahmen oder vorzugsweise mit dem Rahmen des Dachmoduls verbunden. Der Windabweiser 20, insbesondere der Bügel 22, ist in Fahrzeughochrichtung zwischen einer in Fig. 1 gezeigten ausgefahrenen Stellung und wenigstens einer eingefahrenen Stellung relativ zu dem vorderen Dachrahmen und dem Rahmen des Dachmoduls verlagerbar. Da das Netz 24 mit dem Bügel 22 verbunden ist, wird das Netz 24 beim Verlagern des Bügels 22 mit verstellt beziehungsweise mit verlagert. Aus Fig. 1 geht hervor, dass das flexible Netz 24 in der ausgefahrenen Stellung des Windabweisers 20 zwischen dem Bügel 22 und dem vorderen Dachrahmen beziehungsweise dem Rahmen des Dachmoduls aufgespannt ist. In der ausgefahrenen Stellung ist der Bügel 22 in Fahrzeughochrichtung weiter oben als in der eingefahrenen Stellung angeordnet, wobei der in Fahrzeughochrichtung verlaufende Abstand zwischen dem Bügel 22 und dem vorderen Dachrahmen beziehungsweise dem Rahmen durch das Netz 24 überbrückt ist.

Der Windabweiser 20, insbesondere der Bügel 22, ist mit dem Deckelelement 10 beziehungsweise der Bewegung des Deckelelements insofern gekoppelt, als der Bügel 22 beim Öffnen des Deckelelements 10 in die ausgefahrene Stellung verstellt wird. Wird das Deckelelement 10 geschlossen, so wird der Bügel 22 aus seiner ausgefahrenen Stellung in seine eingefahrene Stellung bewegt, wodurch das Netz 24 zusammengefaltet wird.

Mittels des Windabweisers 20 können bei einer Fahrt mit geöffnetem Deckelelement 10 unerwünschte Luftströmungen und daraus resultierende, unerwünschte und im Innenraum des Personenkraftwagens akustisch wahrnehmbare Wummergeräusche vermieden oder zumindest gering gehalten werden, so dass sich ein hoher Fahrkomfort realisieren lässt. Der Windabweiser 20 ist dabei innenliegend ausgeführt. Dies bedeutet, dass der Windabweiser 20 in einem innenliegenden Trockenbereich angeordnet ist, welcher durch eine mit 26 bezeichnete Deckeldichtung begrenzt ist. Die Deckeldichtung 26 umfasst wenigstens ein Dichtungselement, mittels welchem das Deckelelement 10 in der Schließstellung gegen den Rohbau abgedichtet ist.

Besonders gut in Zusammenschau mit Fig. 4 ist erkennbar, dass der Windabweiser 20 an einer in Fahrzeuglängsrichtung vorderen Kante 28 der Dachöffnung 14 angeordnet ist, wobei der Bügel 22 noch ein Stück um die Kante 28 herum in Fahrzeuglängsrichtung nach hinten verläuft. Das heißt, die beiden Schenkel des U-förmigen Bügels erstrecken sich in Fahrzeuglängsrichtung und sind vorzugsweise oberhalb der Führungsschienen für das Deckelement 10 deckungsgleich mit diesen angeordnet. Dadurch wird mittels des Windabweisers 20 auch noch ein seitlicher Teil der Dachöffnung 14 mittels des Netzes 24 abgeschirmt.

In Fig. 1 ist eine mit B1 bezeichnete und in Fahrzeugquerrichtung verlaufende Breite des Windabweisers 20 veranschaulicht. Ferner ist in Fig. 1 eine mit B2 bezeichnete Breite des als Schiebedeckel ausgebildeten Deckelelements 10 veranschaulicht. Aus Fig. 1 ist daher besonders gut erkennbar, dass der Windabweiser 20 nur geringfügig breiter als die Dachöffnung 14 ist, wobei das Deckelelement 10 wesentlich breiter als die Dachöffnung 14 und insbesondere wesentlich breiter als der Windabweiser 20 ist. Somit ist beispielsweise bei geöffnetem Deckelelement 10 lediglich ein mittlerer Teilbereich einer in Fahrzeuglängsrichtung vorderen Kante 30 des Deckelelements 10 in Fahrzeuglängsrichtung nach vorne hin durch den Windabweiser 20 überdeckt, wenn das Deckelelement 10 geöffnet ist und sich der Windabweiser 20 in seiner ausgefahrenen Stellung befindet. In Fahrzeugquerrichtung nach außen hin beidseitig an dem mittleren Teilbereich angrenzende, seitliche und äußere Teilbereiche 32 der vorderen Kante 30 des Windabweisers 20 sind in Fahrzeugquerrichtung weiter außen als der Windabweiser 20 angeordnet und werden demzufolge in der ausgefahrenen Stellung des Windabweisers 20 und in der Offenstellung des Deckelelements 10 in Fahrzeuglängsrichtung nach vorne nicht durch den Windabweiser 20 überdeckt. Da das außenlaufende Deckelelement 10 somit breiter als der Windabweiser 20 ist, ist der Windabweiser 20 für die genannten Teilbereiche 32, welche auch als Deckelaußenbereiche bezeichnet werden, nicht wirksam. In der Folge kann es zu unerwünschten An- beziehungsweise Umströmungen der Deckelelement-Teilbereiche 32 kommen, woraus unerwünschte Windgeräusche resultieren könnten.

Um diese unerwünschten Windgeräusche zu vermeiden und einen besonders hohen Fahrkomfort bei geöffnetem Deckelelement 10 zu realisieren, ist in Fahrzeugquerrichtung außerhalb des Windabweisers 20 beziehungsweise neben dem Windabweiser 20 beidseitig jeweils ein Windabweiselement in Form einer Aeroakustikblende 34 angeordnet. Mit anderen Worten ist sowohl in Fahrzeugquerrichtung rechts außerhalb des Windabweisers 20 als auch in Fahrzeugquerrichtung links außerhalb des Windabweisers 20 jeweils eine Aeroakustikblende 34 angeordnet, wobei die jeweilige Aeroakustikblende 34 zwischen einer in Fig. 1 und Fig. 2a gezeigten eingefahrenen Stellung und wenigstens einer beispielsweise in Fig. 2b und Fig. 3 gezeigten ausgefahrenen Stellung relativ zum Rohbau bewegbar ist. Dabei ist die jeweilige Aeroakustikblende 34 zumindest mittelbar verschwenkbar am Rohbau, insbesondere dem Rahmen, gehalten, so dass zumindest eine in Fahrzeuglängsrichtung hintere Kante 36 der jeweiligen Aeroakustikblende 34 in Fahrzeughochrichtung relativ zum Rohbau verlagerbar ist. Die jeweilige Aeroakustikblende 34, welche auch als Akustikblende bezeichnet wird, kann somit eingeklappt und ausgeklappt, das heißt - in Vorwärtsfahrtrichtung des Fahrzeugs gesehen - vorne hochgestellt oder abgesenkt werden. Um einen besonders einfachen Einbau des Dachmoduls zu realisieren, ist es vorzugsweise vorgesehen, dass auch die jeweilige Aeroakustikblende 34 am Rahmen des Dachmoduls gehalten ist.

Die jeweilige Aeroakustikblende 34 ist insofern mit dem Deckelelement 10 gekoppelt, als die Aeroakustikblende 34 ausgeklappt und somit in ihre ausgefahrene Stellung bewegt wird, wenn das Deckelelement 10 geöffnet wird. Wird das Deckelelement 10 geschlossen, so wird auch die jeweilige Aeroakustikblende 34 wieder eingeklappt, das heißt in ihre eingefahrene Stellung bewegt.

Aus Fig. 2b ist erkennbar, dass die jeweilige Aeroakustikblende 34 in der ausgefahrenen Stellung und in der Offenstellung des Deckelelements 10 auf Höhe der vorderen Kante 30 des Deckelelements 10 angeordnet ist, so dass die Kanten 36 und 30 auf gleicher Höhe angeordnet sind. Dadurch sind die seitlichen, äußeren Teilbereiche 32 des Deckelelements 10 in Fahrzeuglängsrichtung nach vorne durch die jeweiligen Aeroakustikblenden 34 überdeckt, so dass ungünstige Um- beziehungsweise Anströmungen der Kante 30 in dem Teilbereichen 32 durch die Aeroakustikblenden 34 vermieden werden können.

Die Aeroakustikblenden 34 werden beispielsweise durch wenigstens einen jeweiligen, am Deckelelement 10 angeordneten Gleiter aus der ausgefahrenen Stellung in die eingefahrene Stellung verstellt, wenn das Deckelelement 10 geschlossen wird, und in der eingefahrenen Stellung gehalten. Wird das Deckelelement 10 geöffnet, so klappen die Aeroakustikblenden 34 vorzugsweise hinten, das heißt im Bereich ihrer jeweiligen Vorderkante 36, beispielsweise federbetätigt, aus auf die Höhe der vorderen Kante 30 des Deckelelements 10.

Mit anderen Worten ist zum Betätigen der jeweiligen Aeroakustikblende 34 beispielsweise wenigstens ein Federelement vorgesehen, welches beispielsweise einerseits an der jeweiligen Aeroakustikblende 34 und andererseits am genannten Rahmen abgestützt ist. In der eingefahrenen Stellung der Aeroakustikblende 34 ist das Federelement gegenüber der ausgefahrenen Stellung gespannt, so dass von dem Federelement eine Federkraft auf das Windabweiselement (Aeroakustikblende 34) wirkt. Mittels des Deckelelements 10 werden die Aeroakustikblenden 34 gegen diese Federkraftbeaufschlagung in der eingefahrenen Stellung gehalten. Wird das Deckelelement 10 geöffnet, kann sich das jeweilige Federelement entspannen, wodurch das jeweilige Windabweiselement (Aeroakustikblende 34) mittels der Federkraft aus der eingefahrenen Stellung in die ausgefahrene Stellung bewegt wird.

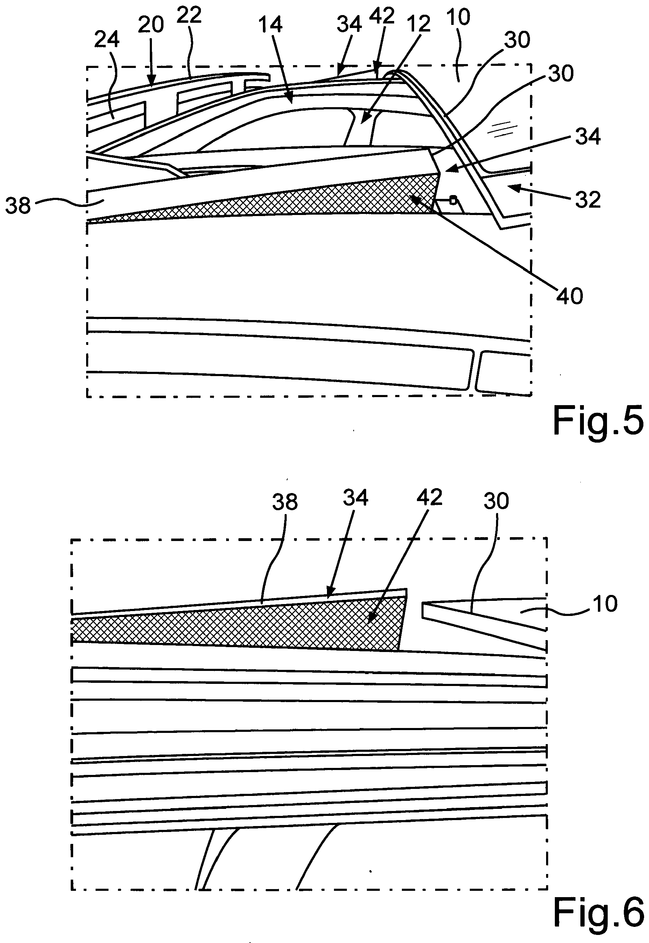

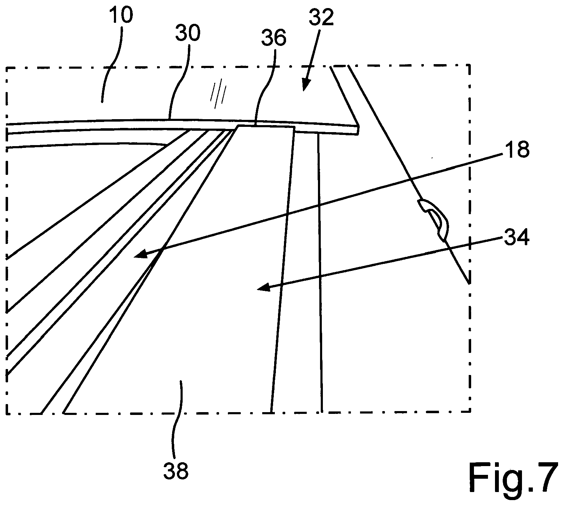

Fig. 4 zeigt die linksseitige Aeroakustikblende 34 in ihrer eingefahrenen Stellung. Fig. 5 bis Fig. 7 zeigen die linksseitige Aeroakustikblende 34 in ihrer ausgefahrenen Stellung. Wie besonders gut in den Fig. 3 und Fig. 5 bis Fig. 7 erkennbar ist, umfasst die jeweilige Aeroakustikblende 34 ein weiteres eigensteifes Spannelement in Form einer hier rechteckförmigen Lamelle 38, ein flexibles und von Luft durchströmbares, äußeres Netz 40 und ein in Fig. 3 nicht erkennbares und in Fig. 6 erkennbares, flexibles und von Luft durchströmbares, inneres Netz 42. Die Netze 40 und 42 sind an der Lamelle 38 gehalten und somit mit der Lamelle 38 zwischen der ausgefahrenen Stellung und der eingefahrenen Stellung mit verstellbar. Andererseits sind die Netze 40 und 42 beispielsweise zumindest mittelbar am Rohbau, insbesondere am Rahmen, gehalten, so dass die Netze 40 und 42 in der ausgefahrenen Stellung zwischen dem Rahmen und der Lamelle 38 aufgespannt sind. Die Netze 40 und 42 sind dabei in Fahrzeugquerrichtung (y-Richtung) voneinander beabstandet angeordnet und überbrücken einen in Fahrzeughochrichtung (z-Richtung) verlaufenden Abstand zwischen dem Rahmen und der Lamelle 38, da die Lamelle 38 in der ausgefahrenen Stellung in Fahrzeughochrichtung weiter oben und somit weiter von dem Rahmen beabstandet ist als in der eingefahrenen Stellung.

Die Aeroakustikblenden 34 sind in der Schließstellung des Deckelelements 10 unterhalb der Teilbereiche 32 des Deckelelements 10 angeordnet, wobei die Aeroakustikblenden 34 in der Offenstellung des Deckelelements 10 in Fahrzeuglängsrichtung vor den Teilbereichen 32 angeordnet sind.

Wie besonders gut in Fig. 4 erkennbar ist, wird die jeweilige Aeroakustikblende 34 in ihrer in Fahrzeuglängsrichtung verlaufenden Länge entsprechend der in Fahrzeuglängsrichtung verlaufenden Länge des vom Deckelelement 10 freigegebenen Teilbereichs 12 der Dachöffnung 14 ausgeführt. Dadurch können ungünstige Luftströmungen auf der gesamten Länge des freigegebenen Teilbereichs 12 vermieden werden. In Fig. 5 sind besonders gut das äußere Netz 40 der linken Aeroakustikblende 34 sowie das innere Netz 42 der rechten Aeroakustikblende 34 erkennbar, wobei Fig. 6 das innere Netz 42 der rechten Aeroakustikblende 34 zeigt. Festzuhalten bleibt, dass es gegebenenfalls ausreichend sein kann, für jede der Aeroakustikblenden 34 jeweils nur ein derartiges Netz vorzusehen, das heißt entweder nur das äußere Netz 40 oder nur das innere Netz 43 oder alternativ ein im mittleren Bereich der jeweiligen Aeroakustikblende 34 vorgesehenes Netz.

Die jeweilige Aeroakustikblende 34 stellt sich beispielsweise aus, sobald das Deckelelement 10 sich nach hinten schiebend geöffnet wird. Die Ausstellhöhe der jeweiligen Aeroakustikblende 34 ist dabei derart gestaltet, dass die jeweilige Aeroakustikblende 34 die Kante 30 in den Teilbereichen 32 nach vorne hin abdeckt. Die jeweiligen, senkrechten Netze 40 und 42 zwischen der Lamelle 38 und dem Rahmen lassen eine gezielte Durchströmung zu, so dass unerwünschte Geräusche vermieden werden können.

Bei dem in den Figuren dargestellten Ausführungsbeispiel sind die Aeroakustikblenden 34 an ihrem der Windschutzscheibe des Fahrzeugs näherliegendem Endbereich schwenkbar am Dach, insbesondere am Dachmodul gelagert. Dabei verläuft deren jeweilige Schwenkachse parallel oder im Wesentlichen parallel zur Fahrzeugquerrichtung. Das Ausfahren beziehungsweise Ausstellen der Aeroakustikblenden 34 beim Freigeben der Dachöffnung 14 durch eine Verlagerung des Deckelements 14 entgegen der Vorwärtsfahrtrichtung des Fahrzeugs nach hinten bewirkt also ein endseitiges Verschwenken der Aeroakustikblenden 34, so dass diese aus ihrer abgelegten Stellung bei in Schließstellung angeordnetem Deckelelement 14, in welcher die Aeroakustikblenden 34 in einer sich zumindest im Wesentlichen in Fahrzeuglängs- und - querrichtung aufspannenden, gedachten Ebene angeordnet sind, in der Art einer nach hinten hin ansteigenden Rampe oder schiefen Ebene aufgestellt werden und zwar so weit, bis deren jeweilige Vorderkante 36 auf die Höhe der vorderen Kante 30 des Deckelelements 10 angehoben ist.

Zusammenfassend bleibt festzuhalten, dass aufgrund der erfindungsgemäßen, im seitlichen Rahmenbereich des Schiebedaches angeordneten, flachen Blenden (Aeroakustikblenden) 34, welche bei geschlossenem Schiebedeckel (Deckelelement) 10 durch diesen niedergehalten werden, und welche bei geöffnetem Schiebedeckel - vorzugsweise selbsttätig mittels Federkraftbeaufschlagung - nur hinten auf die Höhe der Deckelelementvorderkante 30 ausklappen, eine deutliche Reduzierung des im Fahrzeuginnenraum wahrnehmbaren Windgeräusches erzielbar ist und zwar bei Fahrzeugen mit einem Windabweiser 20, dessen Erstreckung in Fahrzeugquerrichtung geringer ist als die Breite der durch den Schiebedeckel freigegebenen Öffnung.

## Patentansprüche

1. Dach für eine Kraftwagen,
- mit wenigstens einem Deckelelement (10), welches in Fahrzeuglängsrichtung zwischen einer Schließstellung zum Verschließen zumindest eines Teilbereichs (12) einer Dachöffnung (14) und wenigstens einer Offenstellung zum Freigeben des Teilbereichs (12) bewegbar ist,
- mit einem zumindest an einer vorderen Kante (28) der Dachöffnung (14) angeordneten Windabweiser (20), welcher zwischen einer eingefahrenen Stellung und wenigstens einer ausgefahrenen Stellung bewegbar ist,
- wobei das Deckelelement (10) breiter ist als der Windabweiser (20), und
- wobei in Fahrzeugquerrichtung außerhalb des Windabweisers (20) beidseitig jeweils wenigstens ein Windabweiselement (34) angeordnet ist, welches zwischen einer eingefahrenen Stellung und wenigstens einer ausgefahrenen Stellung bewegbar ist,
**dadurch gekennzeichnet,**
**dass** das jeweilige Windabweiselement (34) in seiner ausgefahrenen Stellung nach hinten in Richtung auf das in Offenstellung angeordnete Deckelelement (10) in der Art einer ansteigenden Rampe oder schiefen Ebene so aufstellbar ist, dass seitliche, äußere Teilbereiche (32) des Deckelelements (10) in Fahrzeuglängsrichtung nach vorne durch das jeweilige Windabweiselement (34) überdeckt sind.

2. Dach nach Anspruch 1,
**dadurch gekennzeichnet, dass**
bei in seiner ausgefahrenen Stellung nach hinten in Richtung auf das in Offenstellung angeordnete Deckelelement (10) aufgestellte Windabweiselement (34) eine -in Fahrzeuglängsrichtung gesehen- hintere Kante (36) des Windabweiselements (34) auf gleicher Höhe angeordnet ist wie eine -in Fahrzeuglängsrichtung gesehen- vordere Kante (30) des Deckelelements (10).

3. Dach nach Anspruch 1 oder 2,
**dadurch gekennzeichnet, dass**
das jeweilige Windabweiselement (34) wenigstens ein Spannelement (38) und wenigstens ein flexibles Netz (42, 44) aufweist, welches in der ausgefahrenen Stellung durch das Spannelement (38) aufgespannt ist.

4. Dach nach einem der vorhergehenden Ansprüche,
**dadurch gekennzeichnet, dass**
das Dach in Fahrzeugquerrichtung voneinander beabstandete Führungsschienen (18) aufweist, entlang welchen das Deckelelement (10) zwischen der Schließstellung und der Offenstellung verschiebbar ist, wobei die Windabweiselemente (34) in Fahrzeugquerrichtung außerhalb der Führungsschienen (18) angeordnet ist.

5. Dach nach einem der vorhergehenden Ansprüche,
**dadurch gekennzeichnet, dass**
die Windabweiselemente (34) zumindest in der Schließstellung des Deckelelements (10) unterhalb des Deckelelements (10) angeordnet sind.

6. Dach nach Ansprüchen 4 und 5,
**dadurch gekennzeichnet, dass**
jeweilige seitliche Teilbereiche (32) des Deckelelements (10) in Fahrzeugquerrichtung weiter außen als die Führungsschienen (18) angeordnet sind, wobei die Windabweiselemente (34) in der Schließstellung unterhalb der Teilbereiche (32) des Deckelelements (10) angeordnet sind.

7. Dach nach Anspruch 6,
**dadurch gekennzeichnet, dass**
die Windabweiselemente (34) in der Offenstellung in Fahrzeuglängsrichtung vor den Teilbereichen (32) des Deckelelements (10) angeordnet sind.

8. Dach nach einem der vorhergehenden Ansprüche,
**dadurch gekennzeichnet, dass**
das jeweilige Windabweiselement (34) an einem Endbereich, vorzugsweise dem windschutzscheibennahen Endbereich schwenkbar gelagert ist.

9. Kraftwagen mit einem Dach nach einem der vorhergehenden Ansprüche.

## Claims

1. Roof for a motor vehicle,
- with at least one cover element (10), which can be moved in the longitudinal direction of the vehicle between a closed position for closing at least a sub-region (12) of a roof opening (14) and at least one open position for uncovering the sub-region (12),
- with a wind deflector (20), which is located at least at a front edge (28) of the roof opening (14) and movable between a retracted position and at least one extended position,
- wherein the cover element (10) is wider than the wind deflector (20), and
- wherein on both sides at least one wind deflection element (34) movable between a retracted position and at least one extended position is located outside the wind deflector (20) in the transverse direction of the vehicle,
**characterised in that**
the respective wind deflection element (34) can in its extended position be erected rearwards in the direction towards the cover element (10) placed in its open position in the manner of a rising ramp or an inclined plane in such a way that lateral outer sub-regions (32) of the cover element (10) are covered by the respective wind deflection element (34) towards the front in the longitudinal direction of the vehicle.

2. Roof according to claim 1,
**characterised in that**
if the wind deflection element (34) is erected in its extended position rearwards in the direction towards the cover element (10) placed in its open position, a rear edge (36) - as viewed in the longitudinal direction of the vehicle - of the wind deflection element (34) is located at the same level as a front edge (30) - as viewed in the longitudinal direction of the vehicle - of the cover element (10).

3. Roof according to claim 1 or 2,
**characterised in that**
the respective wind deflection element (34) comprises at least one tensioning element (38) and at least one flexible mesh (42, 44), which is stretched by the tensioning element (38) in the extended position.

4. Roof according to any of the preceding claims,
**characterised in that**
the roof comprises guide rails (18), which are spaced in the transverse direction of the vehicle and along which the cover element (10) can be moved between the closed position and the open position, the wind deflection elements (34) being located outside the guide rails (18) in the transverse direction of the vehicle.

5. Roof according to any of the preceding claims,
**characterised in that**
the wind deflection elements (34) are located outside the cover element (10) at least in the closed position of the cover element (10).

6. Roof according to claims 4 and 5,
**characterised in that**
respective lateral sub-regions (32) of the cover element (10) are located farther outside than the guide rails (18) in the transverse direction of the vehicle, the wind deflection elements (34) being located below the sub-regions (32) of the cover element (10) in the closed position.

7. Roof according to claim 6,
**characterised in that**
the wind deflection elements (34) are located in front of the sub-regions (32) of the cover element (10) in the open position in the longitudinal direction of the vehicle.

8. Roof according to any of the preceding claims,
**characterised in that**
the respective wind deflection element (34) is pivotably mounted in an end region, preferably the end region close to the windscreen.

9. Motor vehicle with a roof according to any of the preceding claims.

## Revendications

1. Toit pour un véhicule automobile (10), qui peut se déplacer dans le sens de la longueur du véhicule entre une position de fermeture pour fermer au moins une zone partielle (12) d'une ouverture de toit (14) et au moins une position d'ouverture pour libérer la zone partielle (12),
- comportant au moins un déflecteur de vent (10) disposé au moins sur un bord avant (28) de l'ouverture de toit (14) qui peut se déplacer entre une position entrée et au moins une position sortie,
- l'élément de recouvrement (10) étant plus large que le déflecteur de vent (20) et
- dans le sens de longueur du véhicule à l'extérieur de chaque côté du déflecteur de vent (20) étant disposé au moins un élément de déflecteur de vent (34) qui peut se déplacer entre une position entrée et au moins une position sortie,
**caractérisé en ce que** l'élément de déflecteur de vent (34) respectif dans sa position sortie peut être réglé vers l'arrière en direction de l'élément de recouvrement (10) disposé dans la position d'ouverture sous la forme d'une rampe montante ou d'un plan oblique, de sorte que les zones partielles (32) latérales, extérieures de l'élément de recouvrement (10) soient recouvertes dans le sens de la longueur du véhicule vers l'avant par l'élément de déflecteur de vent respectif (34).

2. Toit selon la revendication 1, **caractérisé en ce que** dans sa position sortie vers l'arrière dans la direction de l'élément déflecteur de vent (34) installé dans l'élément de recouvrement (10) disposé dans la position d'ouverture, un bord (36) arrière, observé dans le sens de longueur du véhicule - est disposé à la même hauteur qu'un bord avant (30) - observé dans le sens de la longueur du véhicule - de l'élément de recouvrement (10).

3. Toit selon la revendication 1 ou 2, **caractérisé en ce que** l'élément déflecteur de vent (34) respectif présente au moins un élément de tension (38) et au moins un filet souple (42, 44) qui est tendu dans la position sortie par l'élément de tension (38).

4. Toit selon l'une des revendications précédentes, **caractérisé en ce que** le toit dans le sens de la longueur présente des rails de guidage (18) espacés les uns des autres le long desquels l'élément de recouvrement (10) peut être coulissé entre la position de fermeture et la position d'ouverture, les éléments déflecteur de vent (34) étant disposés dans le sens transversal du véhicule à l'extérieur des rails de guidage (18).

5. Toit selon l'une quelconque des revendications précédentes, **caractérisé en ce que** les éléments déflecteurs de vent (34) sont disposés au moins dans la position de fermeture de l'élément de recouvrement (10) sous l'élément de recouvrement (10).

6. Toit selon les revendications 4 et 5, **caractérisé en ce que** chacune des zones partielles latérales (32) de l'élément de recouvrement (10) sont disposées dans le sens transversal du véhicule davantage à l'extérieur que les rails de guidage (18), les éléments déflecteur de vent (34) étant disposés dans la position de fermeture sous les zones partielles (32) de l'élément de recouvrement (10).

7. Toit selon la revendication 6, **caractérisé en ce que** les éléments déflecteurs de vent (34) sont disposés dans la position d'ouverture dans le sens de la longueur du véhicule avant les zones partielles (32) de l'élément de recouvrement (10).

8. Toit selon l'une quelconque des revendications précédentes, **caractérisé en ce que** l'élément déflecteur de vent (34) respectif est monté en pivotement sur une zone d'extrémité, de préférence sur la zone d'extrémité proche du pare-brise.

9. Véhicule automobile comportant un toit selon l'une quelconque des revendications précédentes.
